# EUROPÄISCHE PATENTSCHRIFT

(11) **EP 1 461 653 B1**
(45) Veröffentlichungstag und Bekanntmachung des Hinweises auf die Patenterteilung: **01.03.2006**
(21) Anmeldenummer: 02805747.9
(22) Anmeldetag: 28.11.2002
(51) Int. Cl.: G02B 6/44

(54) **SPLEISSKASSETTENMANAGEMENTSYSTEM**
SPLICING CASSETTE MANAGEMENT SYSTEM
SYSTEME DE GESTION DE CASSETTES D'EPISSURAGE

(30) Priorität: 03.01.2002 DE 20200065 U
(43) Veröffentlichungstag der Anmeldung: 29.09.2004
(73) Patentinhaber: CCS Technology, Inc., Wilmington, DE 19803 (US)
(72) Erfinder: IWANEK, Waldemar, 44369 Dortmund (DE)
(74) Vertreter: Sturm, Christoph
(86) Internationale Anmeldenummer: PCT/EP2002/013421
(87) Internationale Veröffentlichungsnummer: WO 2003/056375

(56) Entgegenhaltungen:
- EP-B- 0 645 657
- US-A- 4 948 220
- US-B1- 6 178 282

## Beschreibung

Die Erfindung betrifft ein Spleißkassettenmanagementsystem für einen Lichtweüenieiter-Verteilerschrank gemäß dem Oberbegriff des Anspruchs 1.

Beim Aufbau von Lichtwellenleiterkabel-Netzwerken werden Verteilerschränke für die Gewährleistung einer strukturierten Verkabelung benötigt. Spleißkassetten sind Untereinheiten von Verteilerschränken. Eine Anforderung, die an Lichtwellenleiter-Verteilerschränke gestellt wird, ist eine maximale Bestückung derselben bei hoher Packungsdichte.

Der heutige Standard für Lichtwellenleiter-Verteilerschränke sind sogenannte 19 Zoll Verteilerschränke mit einer Bautiefe von 600 Millimetern. Soll die Bautiefe des Verteilerschranks verkleinert werden, zum Beispiel auf eine Bautiefe von 300 Millimetern, so treten Probleme mit der strukturierten Verkabelung, insbesondere bei der platzsparenden Anordnung der Spieißkassetten im Verteilerschrank, auf.

Hiervon ausgehend liegt der vorliegenden Erfindung das Problem zu Grunde, ein neuartiges Spleißkassettenmanagementsystem für einen Lichtwellenleiter-Verteilerschrank zu schaffen, welches auch bei verringerter Bautiefe des Verteilerschranks eine strukturierte Verkabelung ermöglicht.

Dieses Problem wird durch ein Spleißkassettenmanagementsystem für einen Lichtwellenleiter-Vertellerschrank mit den Merkmalen des Anspruchs 1 gelöst.

Die EP 0 645 657 B1 offenbart ein Spleißkassettenmanagementsystem für einen Lichtwellenleiter-Verteilerschrank, mit einem Gehäuse und einer über Führungsschienen am Gehäuse montierten Trageinrichtung für mehrere Spleißkassetten, wobei die Spleißkassetten zusammen mit der Trageinrichtung gegenüber dem Gehäuse in einer ersten, durch die Führungsschienen vorgegebenen Ebene verschiebbar sind. Die einzeinen Spleißkassetten sind von der ersten Ebene in eine zweite Ebene verschwenkbar, und zwar um eine Achse, die senkrecht zu den Führungsschienen des Spleißkassettenmanagementsystems verläuft.

Hinsichtlich weiteren Standes der Technik wird auf die US 4,948,220 sowie auf die US 6,178,282 verwiesen.

Bevorzugte Weiterbildungen der Erfindung ergeben sich aus den Unteransprüchen und der nachfolgenden Beschreibung. Ein Ausführungsbeispiel wird anhand der Zeichnung näher erläutert. In der Zeichnung zeigt:
- Fig. 1:: ein erfindungsgemäßes Spleißkassettenmanagementsystem für einen Lichtwellenleiter-Verteüerschrank in perspektivischer Seitenansicht,
- Fig. 2:: das Spleißkassettenmanagementsystem der Fig. 1 mit aufgeklappter Abdeckklappe,
- Fig. 3:: das Spleißkassettenmanagementsystem der Fig. 1 mit aufgeklappter Abdeckklappe, zur Vorderseite ausgezogener Schublade und hochgestelltem Spleißkassettenhalter, und
- Fig. 4: das Spleißkassettenmanagementsystem der Fig. 1 mit aufgeklappter Abdeckklappe, zur Hinterseite ausgezogener Schublade und hochgestelltem Spleißkassettenhalter.

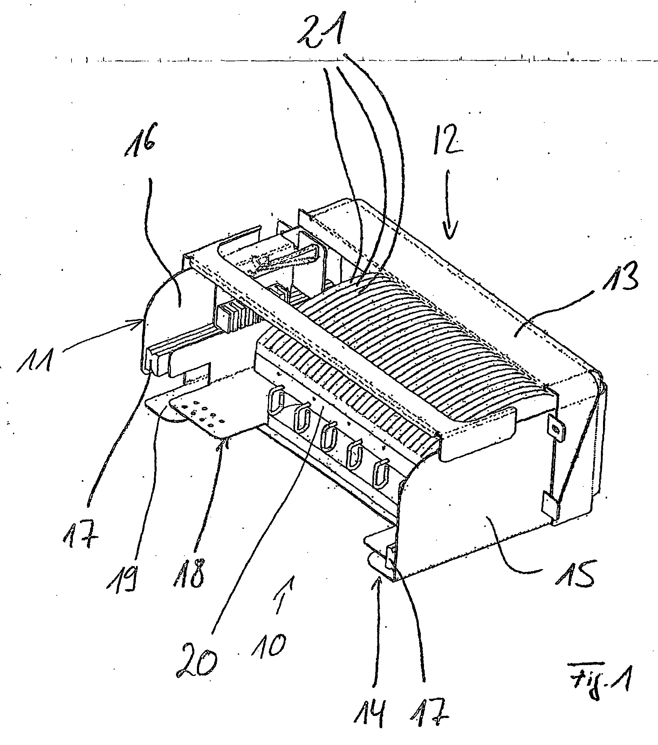

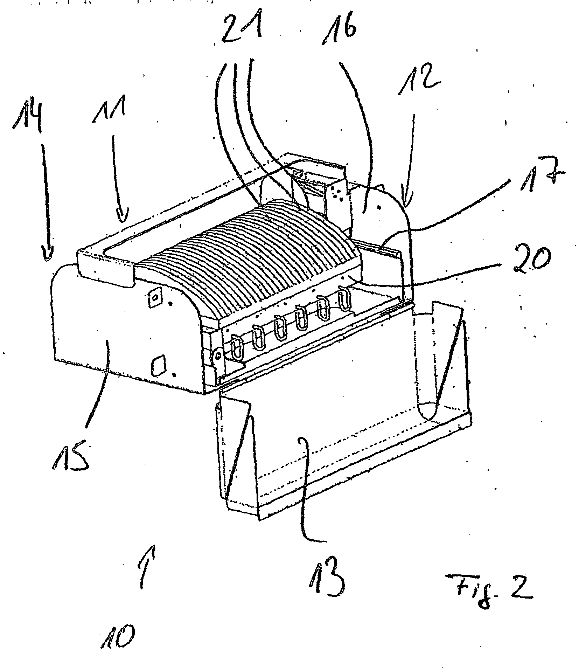

Das erfindungsgemäße Spleißkassettenmanagementsystem 10 gemäß Figuren 1 bis 4 verfügt über ein Gehäuse 11, wobei das Gehäuse 11 an einer Vorderseite 12 desselben von einer Abdeckklappe 13 begrenzt wird. Auf einer der Vorderseite 12 gegenüberliegenden Rückseite 14 des Gehäuses 11 ist im gezeigten Ausführungsbeispiel keine derartige Abdeckklappe vorhanden.

An Seitenwänden 15, 16 des Gehäuses 11 sind Führungsschienen 17 montiert. In den Führungsschienen 17 ist eine Trageinrichtung 18, die als Schublade ausgebildet ist, hin- und herverschiebbar geführt bzw. gelagert. Die als Schublade ausgebildete Trageeinrichtung 18 ist hierdurch in einer ersten Ebene in einer durch die Führungsschienen 17 vorgegebenen Richtung verschiebbar, nämlich parallel zu einer Bodenwand 19 des Gehäuses 11.

In der Trageinrichtung 18 des Spleißkassettenmanagementsystems 10 ist ein Spleißkassettenhalter 20 positioniert. Der Spleißkassettenhalter 20 nimmt mehrere in etwa parallel zueinander verlaufende Spleißkassetten 21 auf.

Zusammen mit der Trageinrichtung 18 ist demnach der Spleißkassettenhalter 20 in der ersten Ebene verschiebbar.

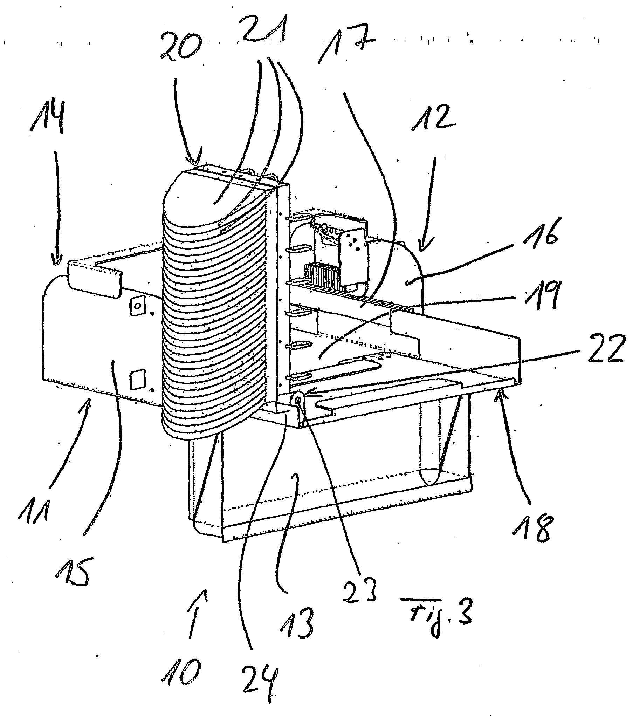

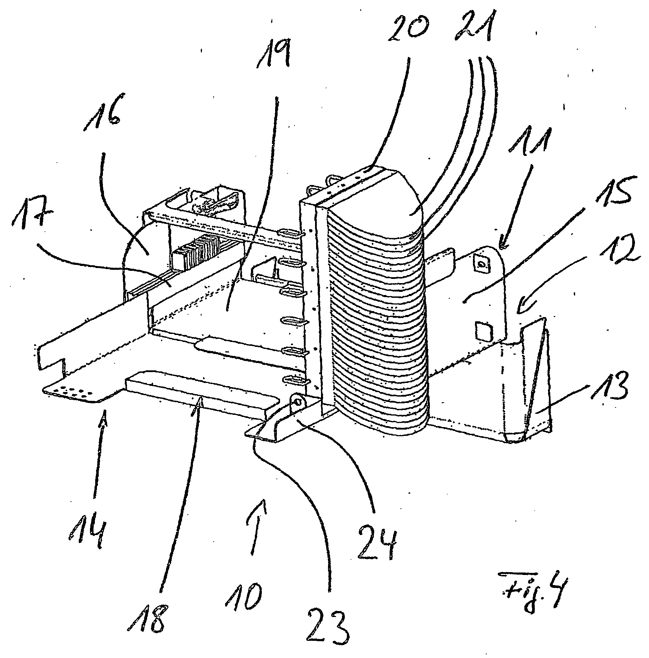

Die Trageinrichtung 18 ist dabei derart ausgebildet, dass dieselbe zusammen mit dem Spleißkassettenhalter, 20 sowohl zur Vorderseite 12 als auch zur Rückseite 14 aus dem Spleißkassettenmanagementsystem 10 heraus bewegt werden kann. Figur 3 zeigt das Spleißkassettenmanagementsystem 10 mit aufgeklappter Abdeckklappe 13 und mit zur Vorderseite 12 des Spleißkassettenmanagementsystems 10 herausgeschobener Trageinrichtung 18. Figur 4 zeigt das Spleißkassettenmanagementsystem 10 mit zur Rückseite desselben herausgeschobener Trageinrichtung 18.

Erfindungsgemäß ist der Spleißkassettenhalter 20 nicht nur zusammen mit der Trageinrichtung 18 in der ersten Ebene, die parallel zur Bodenwand 19 des Spleißkassettenmanagementsystems 10 verläuft, hin- und herbewegbar, sondern zusätzlich auch von der ersten Ebene in eine zweite Ebene klappbar, wobei die zweite Ebene in etwa senkrecht zur ersten Ebene verläuft. Hierzu ist dem Spleißkassettenhalter 20 an einer Seite 22 desselben eine Schwenkeinrichtung 23 zugeordnet. Über die Schwenkeinrichtung 23 ist der Spleißkassettenhalter 20 an der Trageinrichtung 18 befestigt. Wie insbesondere Figuren 3 und 4 entnommen werden kann, ist diese Schwenkeinrichtung 23 einer Seitenwand 24 der Trageinrichtung 18 zugeordnet. Zum Herausklappen des Spleißkassettenhalters 20 aus der ersten Ebene in die zweite Ebene wird der Spleißkassettenhalter 20 um eine Drehachse der Schwenkeinrichtung 23, die sich in etwa parallel zur Seitenwand 24 der Trageinrichtung 18 erstreckt, um 90° verschwenkt. Die Seitenwand 24 bildet dann einen Anschlag sowie eine Stütze für den in die zweite Ebene verschwenkten Spleißkassettenhalter. Die Schwenkeinrichtung 23 ist vorzugsweise als Rastgelenk ausgebildet wobei in einer ersten Raststufe der Spleißkassettenhalter 20 in die Ebene der Trageinrichtung 18 und in einer zweiten Raststufe 20 aus dieser ersten Ebene hinaus in die zweite Ebene geschwenkt ist.

Mithilfe des erfindungsgemäßen Spleißkassettenmanagementsystems 10 lassen sich die Spleißkassetten 21 bzw. der Spleißkassettenhalter 20 besonders platzsparend im Verteilerschrank positionieren. Hierdurch können hohe Packungsdichten im Lichtwellenleiter-Verteilerschrank realisiert werden. Zum Zugriff auf die in den Spleißkassetten 21 abgelegten Lichtwettenteiter muss der Spleißkassettenhalter 20 lediglich zusammen mit der Trageinrichtung 18 zu einer Seite des Spleißkassettenmanagementsystems 10 aus dem Gehäuse 11 heraus bewegt und anschließend in die zweite Ebene verschwenkt werden.

### Bezugszeichenliste

- 10: Spleißkassettenmanagementsystem
- 11: Gehäuse
- 12: Vorderseite
- 13: Abdeckklappe
- 14: Rückseite
- 15: Seitenwand
- 16: Seitenwand
- 17: Führungsschlene
- 18: Trageinrichtung
- 19: Bodenwand
- 20: Spleißkassettenhalter
- 21: Spleißkassette
- 22: Seite
- 23: Schwenkeinrichtung
- 24: Seitenwand

## Patentansprüche

1. Spleißkassettenmanagementsystem für einen Lichtwellenleiter-Verteilerschrank, mit einem Gehäuse (11) und einer über Führungsschienen (17) am Gehäuse (11) montierten Trageinrichtung (18) für mehrere Spleißkassetten (21), wobei die Spleißkassetten (21) zusammen mit der Trageinrichtung (18) gegenüber dem Gehäuse (11) in einer ersten, durch die Führungsschienen (17) vorgegebenen Ebene verschiebbar sind, **dadurch gekennzeichnet, dass** die Spleißkassetten (21) in einem Spleißkassettenhalter (20) angeordnet sind, und dass die Spleißkassetten (21) zusammen mit dem Spleißkassettenhalter (20) bei aus dem Gehäuse (11) herausgeschobener Trageinrichtung (18) gegenüber der Trageinrichtung (18) von der ersten Ebene um eine Drehachse einer Schwenkeinrichtung (23) um in etwa 90° in eine zweite Ebene verschwenkbar sind, wobei sich die Drehachse der Schwenkeinrichtung (23) in etwa parallel zu einer Seitenwand (24) der Trageinrichtung (18) erstreckt.

2. Spleißkassettenmanagementsystem nach Anspruch 1, **dadurch gekennzeichnet, dass** der Spleißkassettenhalter (20) zusammen mit der Trageinrichtung (18) über die Führungsschienen (17) zu zwei sich gegenüberliegenden Seiten (12, 14) des Gehäuses (11) aus demselben herausziehbar ist.

3. Spleißkassettenmanagementsystem nach Anspruch 1 oder 2, **dadurch gekennzeichnet, dass** die Trageinrichtung (18) als Schublade ausgebildet ist.

4. Spleißkassettenmanagementsystem nach einem oder mehreren der Ansprüche 1 bis 3, **dadurch gekennzeichnet, dass** der Spleißkassettenhalter (20) über die Schwenkeinrichtung (23) an der Trageinrichtung (18) befestigt ist.

5. Spleißkassettenmanagementsystem nach einem oder mehreren der Ansprüche 1 bis 4, **dadurch gekennzeichnet, dass** die Schwenkeinrichtung (23) als Rastgefenk ausgebildet ist.

## Claims

1. Splice cassette management system for an optical fiber distribution cabinet, having a housing (11) and a mount device (18), which is mounted via guide rails (17) on the housing (11), for a plurality of splice cassettes (21), whereby the splice cassettes (21) can be moved together with the mount device (18) with respect to the housing (11) in a first plane which is predetermined by the guide rails (17), **characterized in that** the splice cassettes (21) are arranged in a splice cassette holder (20), and **in that** the splice cassettes (21) can be pivoted together with the splice cassette holder (20) with respect to the mount device (18), with the mount device (18) pushed out of the housing (11), from the first plane about a rotation axis of a pivoting device (23) through about 90° to a second plane, with the rotation axis of the pivoting device (23) extending approximately parallel to one side wall (24) of the mount device (18).

2. Splice cassette management system according to Claim 1, **characterized in that** the splice cassette holder (20) can be pulled out of the housing (11) together with the mount device (18) via the guide rails (17) on two opposite faces (12, 14) of the housing (11).

3. Splice cassette management system according to Claim 1 or 2, **characterized in that** the mount device (18) is in the form of a drawer.

4. Splice cassette management system according to one or more of Claims 1 to 3, **characterized in that** the splice cassette holder (20) is attached to the mount device (18) via the pivoting device (23).

5. Splice cassette management system according to one or more of Claims 1 to 4, **characterized in that** the pivoting device (23) is in the form of a latching joint.

## Revendications

1. Système de gestion de cassettes d'épissurage pour une armoire de distribution de guide d'onde optique, comprenant un boîtier (11) et un dispositif de support (18) pour plusieurs cassettes d'épissurage (21) monté sur le boîtier (11) par le biais de rails de guidage (17), les cassettes d'épissurage (21) pouvant être coulissées conjointement avec le dispositif de support (18) par rapport au boîtier (11) dans un premier plan prédéfini par les rails de guidage (17), **caractérisé en ce que** les cassettes d'épissurage (21) sont disposées dans un support de cassettes d'épissurage (20), et **en ce que** les cassettes d'épissurage (21) peuvent pivoter conjointement avec le support de cassettes d'épissurage (20) par rapport au dispositif de support (18) du premier plan autour d'un axe de rotation d'un dispositif de pivotement (23) d'environ 90° dans un deuxième plan lorsque le dispositif de support (18) est sorti du boîtier (11), l'axe de rotation du dispositif de pivotement (23) s'étendant approximativement parallèlement à une paroi latérale (24) du dispositif de support (18).

2. Système de gestion de cassettes d'épissurage selon la revendication 1, **caractérisé en ce que** le support de cassettes d'épissurage (20) peut être ressorti conjointement avec le dispositif de support (18) hors du boîtier (11) par le biais des rails de guidage (17) vers deux côtés opposés (12, 14) du boîtier (11).

3. Système de gestion de cassettes d'épissurage selon la revendication 1 ou 2, **caractérisé en ce que** le dispositif de support (18) est réalisé sous forme de tiroir.

4. Système de gestion de cassettes d'épissurage selon l'une quelconque ou plusieurs des revendications 1 à 3, **caractérisé en ce que** le support de cassettes d'épissurage (20) est fixé sur le dispositif de support (18) par le biais du dispositif de pivotement (23).

5. Système de gestion de cassettes d'épissurage selon l'une quelconque ou plusieurs des revendications 1 à 4, **caractérisé en ce que** le dispositif de pivotement (23) est réalisé sous forme d'articulation à verrouillage.
